# EUROPEAN PATENT APPLICATION

(11) **EP 1 705 561 A2**
(43) Date of publication of application: **27.09.2006**
(21) Application number: 05021720.7
(22) Date of filing: 05.10.2005
(51) Int. Cl.: G06F 9/44

(54) **Multiplexing and de-multiplexing graphics streams**

(30) Priority: 18.11.2004 US 629036 P; 29.07.2005 US 194131
(71) Applicant: Microsoft Corporation, Redmond WA 98052 (US)
(72) Inventor: Khouzam, Gilles, Redmond, WA 98052 (US); David, Paul C., Redmond, WA 98052 (US); Ungureanu, Oreste Dorin, Redmond, WA 98052 (US); Secchia, Adrian, Redmond, WA 98052 (US); Arsov, Andrey E., Redmond, WA 98052 (US)
(74) Representative: Goddar, Heinz J.

(57) **Abstract**

Described is the multiplexing and de-multiplexing of graphics streams, including by generating first higher-level graphics instructions from a first application program upon connecting to a client computer. A first identifier representing the first application program is associated with the first higher-level graphics instructions. Second higher-level graphics instructions are generated from a second application program, with a second identifier representing the second application program associated with the second higher-level graphics instructions. The first higher-level graphics instructions and the second higher-level graphics instructions are sent to the client computer. A server computer thus allows one or more application programs to be accessed by a client computer. The server includes a compositor that extracts higher-level graphics commands from one of the application programs, along with a remote display driver that packages the higher-level graphics commands for use by the client computer to generate graphics.

## Description

### CROSS-REFERENCE TO RELATED APPLICATION

The present application claims priority to United States provisional patent application serial number 60/629,036, filed November 18, 2004, assigned to the assignee of the present invention, and hereby incorporated by reference.

### BACKGROUND

A server computer may host application programs that are accessed by client machines, typically remote computers. Examples of such technology include terminal service platforms, such as Windows® Server-based operating systems provided by Microsoft Corporation, in which application programs run on a central server while user interfaces corresponding to those programs are presented on a client machine.

The application program's user interfaces in implementations such as these can include complex graphics. However, the remote transmission of rich graphical content from a server to a client machine can consume large amounts of bandwidth. One way to reduce the amount of bandwidth consumed is by sending high-level descriptions of graphics across the transmission medium instead of sending rendered instances. For example, vector drawing primitives may be sent instead of bitmaps. Nevertheless, even with a mechanism that sends vector drawing primitives, a large amount of bandwidth is often still needed to transport the vector drawing primitives for complex graphics.

### SUMMARY

Briefly, various aspects of the present invention are directed towards multiplexing and de-multiplexing graphics streams, including by generating first higher-level graphics instructions from a first application program upon connecting to a client computer. A first identifier representing the first application program is associated with the first higher-level graphics instructions. Second higher-level graphics instructions are generated from a second application program, with a second identifier representing the second application program associated with the second higher-level graphics instructions. The first higher-level graphics instructions and the second higher-level graphics instructions are sent to the client computer.

A server computer allows one or more application programs to be accessed by a client computer. The server includes a compositor that extracts higher-level graphics commands from one of the application programs, along with a remote display driver that packages the higher-level graphics commands for use by the client computer to generate graphics.

Other advantages will become apparent from the following detailed description when taken in conjunction with the drawings.

### BRIEF DESCRIPTION OF THE DRAWINGS

The present invention is illustrated by way of example and not limited in the accompanying figures in which like reference numerals indicate similar elements and in which:

FIGURE 1 shows an illustrative example of a general-purpose computing environment into which various aspects of the present invention may be incorporated.

FIG. 2 is a block diagram of a server computer and various example client computers capable of being connected to the server computer.

FIG. 3 is a block diagram of a server computer and a client computer, each including graphics components.

FIG. 4 is block diagram of server and client computing environment used to process higher-level graphics commands to generate graphics at the server computer and at the client computer.

FIG. 5 is a representation of compositions being multiplexed and de-multiplexed across a boundary.

FIG. 6 is a representation of a multiplexing mechanism that adorns packets with identifiers for transporting across a boundary.

FIG. 7 is a representation of a mechanism that uses packet identifiers for de-multiplexing packets transported across a boundary, showing the stream of FIG. 6 after separation on the client side and ready to be rendered.

FIG. 8 is a flow diagram generally representing how packets for remote transport are adorned with an identifier.

FIG. 9 is a representation generally showing use of the transport with identifiers.

FIG. 10 is a representation of logical channel use and resource addressing.

### DETAILED DESCRIPTION

### EXEMPLARY OPERATING ENVIRONMENT

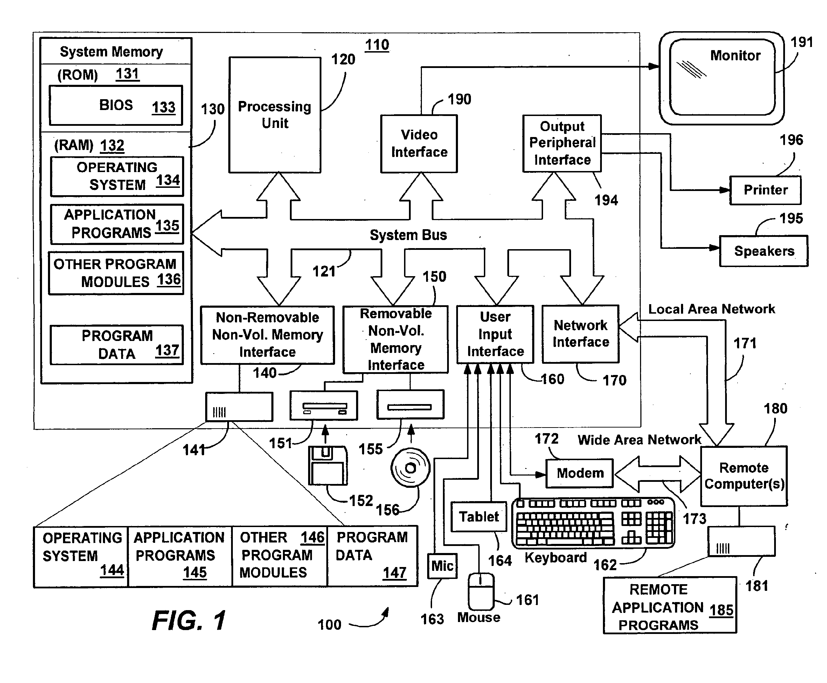

FIGURE 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to: personal computers, server computers, handheld or laptop devices, tablet devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, and so forth, which perform particular tasks or implement particular abstract data types. The invention may also be practiced in distributed computing environments where tasks are performed by remote processing devices that are linked through a communications network. In a distributed computing environment, program modules may be located in local and/or remote computer storage media including memory storage devices.

With reference to FIG. 1, an exemplary system for implementing the invention includes a general purpose computing device in the form of a computer 110. Components of the computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 110 typically includes a variety of computer-readable media. Computer-readable media can be any available media that can be accessed by the computer 110 and includes both volatile and nonvolatile media, and removable and non-removable media. By way of example, and not limitation, computer-readable media may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by the computer 110. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136 and program data 137.

The computer 110 may also include other removable/non-removable, volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, described above and illustrated in FIG. 1, provide storage of computer-readable instructions, data structures, program modules and other data for the computer 110. In FIG. 1, for example, hard disk drive 141 is illustrated as storing operating system 144, application programs 145, other program modules 146 and program data 147. Note that these components can either be the same as or different from operating system 134, application programs 135, other program modules 136, and program data 137. Operating system 144, application programs 145, other program modules 146, and program data 147 are given different numbers herein to illustrate that, at a minimum, they are different copies. A user may enter commands and information into the computer 110 through input devices such as a tablet, or electronic digitizer, 164, a microphone 163, a keyboard 162 and pointing device 161, commonly referred to as mouse, trackball or touch pad. Other input devices not shown in FIG. 1 may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. The monitor 191 may also be integrated with a touch-screen panel or the like. Note that the monitor and/or touch screen panel can be physically coupled to a housing in which the computing device 110 is incorporated, such as in a tablet-type personal computer. In addition, computers such as the computing device 110 may also include other peripheral output devices such as speakers 195 and printer 196, which may be connected through an output peripheral interface 194 or the like.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160 or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

### GRAPHICS STREAMS ACROSS BOUNDARIES

Various aspects of the technology described herein are directed towards a mechanism and methods that may be used to multiplex change instructions to possibly complex graphics from various server application programs, for transporting to a client machine. In one example implementation generally described herein, the mechanism works with a server and remote client machines. However, as can be readily appreciated, the present invention is not limited to remote machines, but rather, the examples are applicable to other scenarios, such as a client running on the same machine as the server, multiple distributed servers serving a single client machine, and so forth. Moreover, numerous ways to implement the present invention are feasible, including for use in displaying graphics, but also for output to printers, files, generic devices and so forth. As such, the present invention is not limited to any of the particular examples used herein, but rather may be used numerous ways that provide benefits and advantages in computing in general.

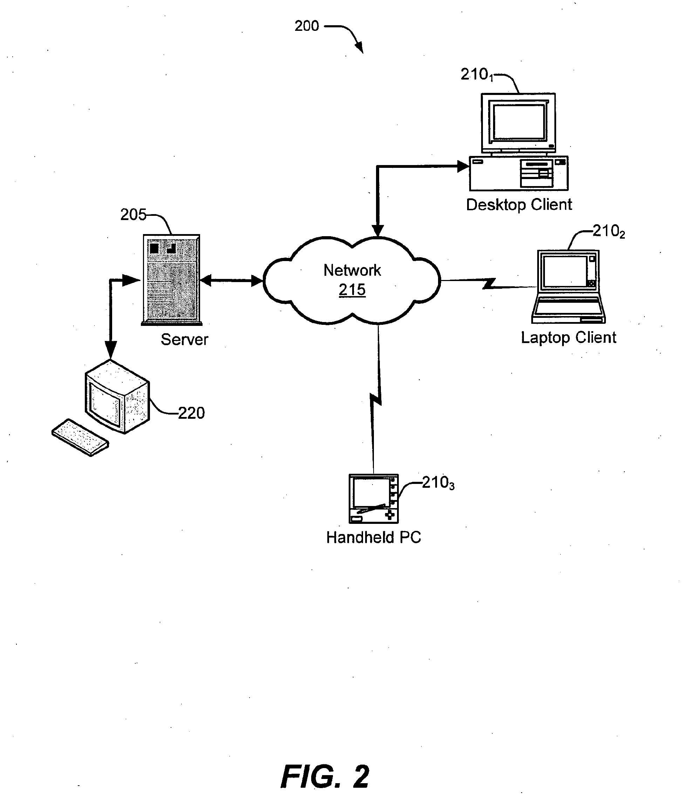

Turning to FIG. 2 of the drawings, there is shown a block diagram representing an example client-server computing environment 200. The example computing environment 200 includes a server computer 205 (e.g., the computer system 110 of FIG. 1) connected to multiple client computers 210₁-210₃ connected via a network 215. Note that while three client machines 210₁-210₃ are shown for purposes of this example, there may be any practical number.

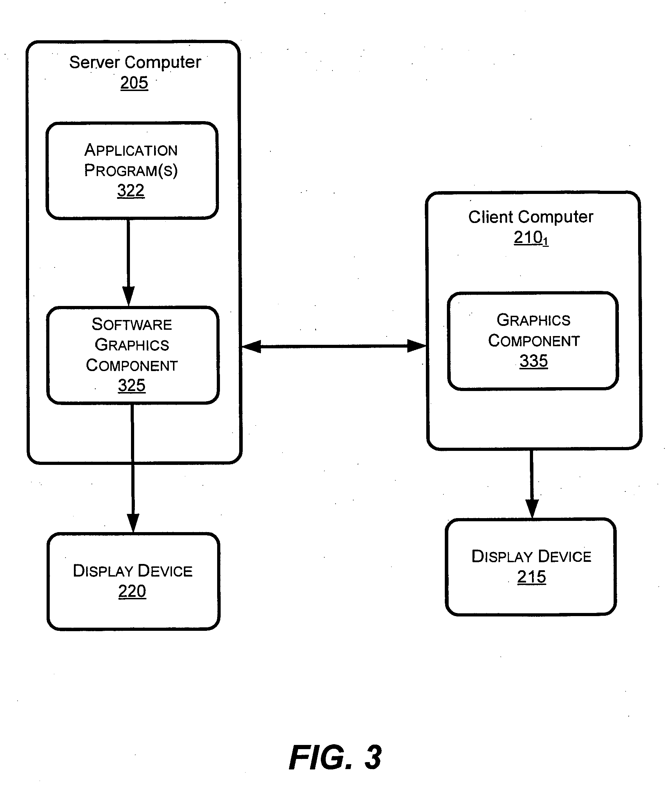

In general, one or more application programs 322 (FIG. 3) run on the server computer 205 on behalf of the client computers 210₁-210₃. As described below, the application programs generate graphics commands that are ultimately used to generate graphics on display devices of the remote client computers 210₁-210₃. Note that although graphics on display devices is described herein, the examples also apply to equivalent output, such as printer output.

The computing environment 200 is only an example that is representative of many different architectures, including direct dialup via modem, enterprise LANs (local area networks), WANs (wide area networks) and the Internet. The network 215 may be implemented in a number of ways to support such networking contexts, including wired-based technologies and/or wireless technologies. Various aspects of the technology described herein are not limited to one specific network architecture or network technology.

The server computer 205 may be implemented as a Windows® operating system-based server, or may be based on any other server platform. The server computer 205 supports or hosts one more application programs 322 (FIG. 3) that are accessed by client computers 210 through a communication protocol, such as remote desktop protocol (RDP) as defined by Microsoft Corporation, or remote procedure call (RPC). Through the communication protocol, the server computer 205 determines if a client computer of client computers 210 is able to generate graphics using relatively higher-level graphics commands, comprising commands that are received from the applications programs and used to generate graphics locally at the server computer 205. Examples of such higher-level graphics commands include retained mode drawing instructions comprising drawing primitives, commands and/or data, and may be represented as nodes in a composition (or rendering) tree.

The client computers 210 represent various kinds of computers or computing devices that may connect to server 205 over the network 215. For example, the client computer labeled 210₁ may be a conventional desktop personal computer, which includes a local operation system, processing unit, and storage system. The client computer 210₂ is illustrated as a portable laptop computer, which may be connected to the network via a conventional network card or a modem connection. The client computer 210₂ may be a standalone computer that can be configured with its own operating system, processing unit, and storage system. The client computer 210₃ may comprise a handheld PC, which typically possesses less functionality than a general-purpose computer.

A display device 220, which includes a display monitor and can be considered as including input devices such as a keyboard and mouse, may be locally connected to the server 205. The display device 220 and accompanying input devices provides local user input to application programs resident on the server computer 205. In general, graphics are generated at the display device 220 by a graphics composition engine resident in the server computer 205, where the graphics composition engine receives higher-level graphics commands from the resident application programs.

The application programs 322 (FIG. 3) resident on the server computer 205 may specify graphics in terms of relatively higher-level graphics instructions including graphics commands / data / primitives. For example, primitives corresponding to a retained graphics mode rendering (composition) tree may be provided by a presentation subsystem /media integration layer (MIL). The application programs 322 may leverage graphics components provided by the operating system, whereby the application programs 322 can generate the relatively higher-level graphics commands which can specify graphics in terms of nodes that specify a user interface.

FIG. 3 shows example components at the server computer 205 and the client computer (e.g., 210₁). The server computer 205 includes at least one application program 322, and a software graphics component 325. The software graphics component 325 may include multiple components. In general, the software graphics component 325 is able to receive higher-level graphics commands from the application program 322. The higher-level graphics commands are used to generate graphics locally which may be displayed on the display device 220. A concept referred to as "shadowing" may be conducted, in which the same graphics that are generated on the server computer and displayed at the client computer 210₁ are also locally rendered and displayed at the server computer 205.

The server computer 205 communicates with the client computer 210₁ and determines whether the client computer 210₁ is able to generate graphics using higher-level graphics commands. If so, the server computer 205 sends the higher-level graphics commands to the client computer 210₁. If not, the server computer 205 may render lower-level graphics commands such as bitmaps from the higher-level graphics commands, and send the lower-level graphics commands to the client computer.

For purposes of explanation, the examples used hereinafter refer to higher-level graphics commands being sent to the client computer 210₁. Thus, a graphics component 335 of the client computer 210₁ receives the higher-level graphics commands and generates graphics displayed on a display device 215 at the client computer 210₁.

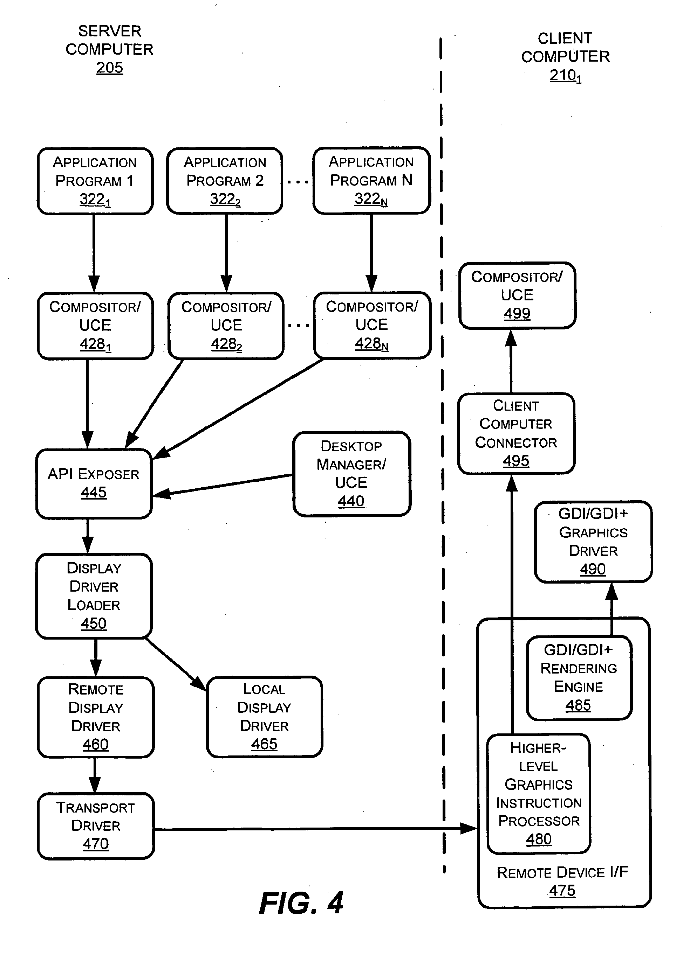

FIG. 4 shows more detailed example implementations at the server computer 205 and the client computer 210₁. These example implementations architectures are particularly designed to provide higher-level graphics commands in the form of formatted graphics instructions to client computers that are capable of generating graphics using such higher-level graphics commands.

In FIG. 4, one or more application programs 322₁₋322_{N}, such as represented by the application program(s) 322 of FIG. 3, may be hosted at the server computer 205, and accessed by the client computer (e.g., 210₁). The application programs 322₁-322_{N} provide relatively higher-level graphics instructions, such as retained mode graphics primitives and data corresponding to rendering (composition) trees. Examples of higher-level graphics primitives are those of nodes that represent shapes, text, buttons, transforms and the like.

Any of the application programs 322₁-322_{N} may include a dedicated thread for graphics compositing or generating, where the dedicated thread is used to monitor a communication protocol (e.g., RDP or RPC) used in connecting a compositor/UCE (unified composition engine) 428₁-428_{N}. A dedicated compositor/UCE may be provided for each of application programs.

The compositor/UCE modules 428₁-428_{N} are visual composition modules that support a media integration layer (MIL) that provides graphic information used by one or more client computer platforms. For example, a compositor/UCE (e.g., 428₁) may process or extract higher-level graphics instructions from a corresponding application program 322₁. The higher-level graphics instructions are subsequently processed and sent to a client computer, e.g., the client computer 210₁.

When one or more application programs 322₁-322_{N} are running in a desktop or windowing environment, a display or graphical image is shown that may include graphics from one more of the application programs 322ᵢ-322_{N}, as well as from a desktop or windowing environment. A desktop manager/UCE 440 provides higher-level graphics instructions for graphics provided by the desktop or windowing environment, which are combined with graphics from one or more of the application programs 322₁-322_{N} as described below

In one implementation, the compositor/UCE 428₁-428_{N} and desktop manager/UCE 440 provide higher-level graphics instructions to an application program interface (API) exposer 445. The API exposer 445 comprises an interface that allows the compositor/UCE 428₁-428_{N} and desktop manager/UCE 440 to communicate with a display driver loader 450.

The display driver loader 450 loads a remote display driver 460 and a local display driver 465. Higher-level graphics instructions are sent to the remote display driver 460 which formats the graphics commands into an appropriate format as defined by the communication protocol used by the server 205 and the client 210₁. For example, the remote display driver 460 may package, perform any caching on, and/or compress the graphics commands.

The local display driver 465 receives higher-level graphics commands generated into graphics locally at the server computer 205. The local display driver 465 is used when displaying the graphics locally and/or when shadowing. Shadowing or remote assistance is performed when graphic images (i.e., higher-level or lower-level graphics commands) that are sent to the client computer 210₁ are viewed at a local display device such as the display device 220 of FIG. 2.

Formatted higher-level graphics commands from the remote display driver 460 are provided to a transport driver 470 for transmission over a network or networks to the client computer 210₁. The transport driver 470 may be based on one of several transport protocols such as transmission control protocol/Internet protocol (TCP/IP). The transport driver 470 may package the formatted graphics primitives or graphics data into data packets.

Graphics commands (i.e., data packets) are received at the client computer 210₁ through a remote device interface 475. The remote device interface 475 may be based on the communication protocol between the server computer 205 and the client computer 210₁.

The remote device interface 475 includes a higher-level graphics instruction processor 480 (and/or a GDI/GDI+ rendering engine 485 for lower-level graphics commands, e.g., for handling lower-level graphics commands when coupled to other servers). In the case where the client computer 210₁ receives graphics in the form of higher-level graphics instructions, the higher-level graphics instruction processor 485 extracts data packets that include the higher-level graphics instructions from a received stream of data from the server computer 205. In the event that lower-level graphics commands that are received, they are processed by the GDI/GDI+ rendering engine 485 and passed to a GDI/GDI+ graphics driver 490 which generates graphics. The generated graphics are shown on a local (client) display device such as display device 215 of FIG. 2.

When higher-level graphics instructions are received by the client computer 210₁ to generate graphics, a client computer connector 495 receives the packets of data from the higher-level graphics command processor 450, and parses the packets into higher-level graphics instructions. The parsed higher-level graphics instructions are sent from the client computer connector 495 to a client compositor/UCE 499 which generates graphics using the higher-level graphics commands.

Thus, transporting rich graphical content from a server to a remote client machine can benefit by sending vector drawing primitives and other graphics instructions instead of bitmaps. In keeping with the present invention, bandwidth usage can be further reduced during the update process. To this end, when client-side graphics need updating, it is more efficient to send granular, high-level update information instead of information corresponding to graphics instructions for rendering the entire desktop. For example, when a user moves a window, it is more efficient to send instructions to transform the window position rather than resending graphics instructions that redraw the entire window and/or desktop's contents.

In order to send high-level instructions and update them in a granular fashion, transport structural information describing the relative positions and interactions of the drawing primitives is transported. In a local case, a composition (or rendering) tree may be used to describe the hierarchical positions (e.g., overlap) and interactions (e.g., transparency) of these primitives.

Various aspects of the technology described herein are directed towards efficiently transporting the hierarchy of this composition tree to a client machine, such that rendering and updating can occur on the client. The same transport mechanism that initially builds the tree enables granular updating of individual nodes. This method of transport can be used to preserve the hierarchical relationships of single or multiple trees during transport across machine or process boundaries.

In one implementation, a multi-threaded composition infrastructure exemplifies a local usage of cross-process transport. A multi-threaded composition architecture may be used to leverage processor power by distributing rendering across multiple threads. The transport mechanism described in the examples herein allows this type of architecture to marshal tree updates across processes.

To enable transport across a boundary, such as a machine boundary, process boundary or both, serialization of information from several different processes and/or machines into a stream may be necessary in both local and remote scenarios. After transport, this information stream needs to be unpacked such that information about its device and/or process of origin remains intact. This allows each process and/or device to receive updates independently.

To this end, various mechanisms and methods are described that allow granular updates to content that is defined on one side of a boundary, transported across the boundary, then rendered on the far side. The mechanisms and methods apply to transport across many scales of boundaries, as described below. This scalable, efficient transport comprising packing and unpacking enables targeted, granular updates to rich graphics whose complete definition is typically too expensive in terms of bandwidth consumption to transport repeatedly in its entirety. Note that the example implementations may not need special mechanisms for different sources of information. For example, content from the desktop window manager can travel through the same transmission medium (pipe) as content from application programs, and then can be unpacked in the same way.

As described above, an application program 322 generates a stream of graphics instructions to output some content, such that a rendering system can convert this stream to something that can be viewed, e.g., on a display monitor, a printer and the like. When remoting the application (that is, the display is on another machine), there may be only one transport shared among multiple applications that are generating graphics at the same time.

In order to be able to differentiate the graphics instructions that are generated by one application versus the instructions that are generated by another application, as each graphics packet (or batch) is ready to be submitted on the transport, a unique identifier for each application is added to the packet such that it can be identified on the remote side as belonging to the specific application.

When the packet reaches the remote side, the streams are then be separated according to this unique identifier, whereby each graphics stream is intact and may be rendered independently of the other applications that may have used the same transport with similar streams. In other words, the unique identifier allows the multiplexing and de-multiplexing of instructions from various applications and/or the desktop, thereby facilitating transmission of graphical update information.

By identifying packets associated with individual compositions, the packets may be serialized without losing information about their device and/or process of origin. To this end, serialized packets are tagged each time they are consolidated into pipes for transport. Upon unpacking from these pipes, each packet can be re-associated with the appropriate composition.

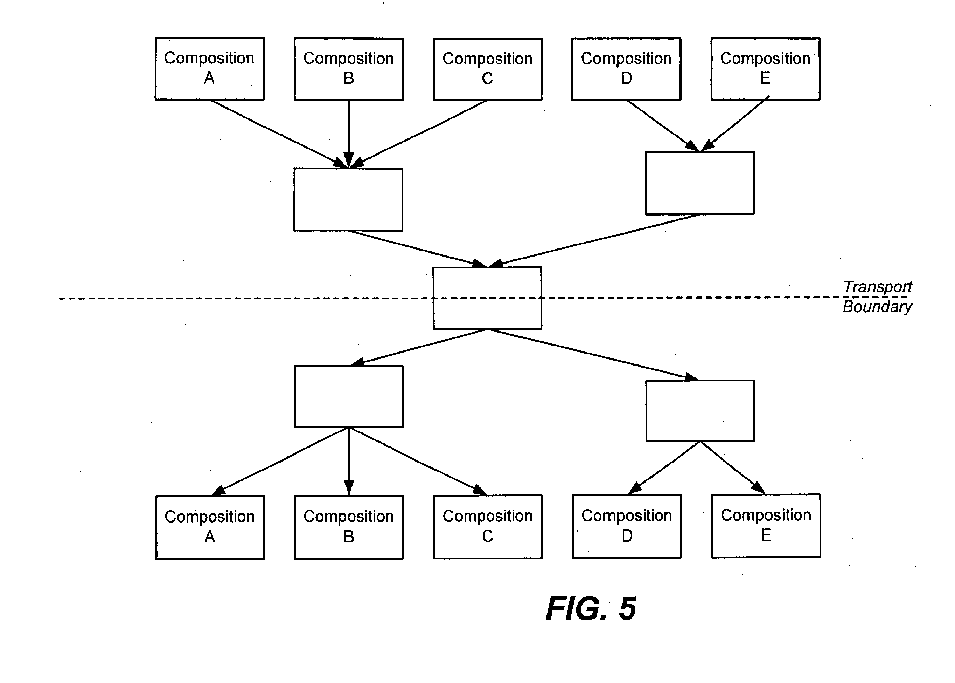

FIG. 5 shows how the information in each independent composition is consolidated for transport across the boundary (wherein the boundary is represented by the dashed line). Potential levels of consolidation include serialization of content within one process into one pipe (as in a local client case), serialization of content within many processes into one pipe per session (as in a remote desktop scenario), serialization of content within many sessions into one pipe per machine, an serialization of content from many machines into one pipe per subnet.

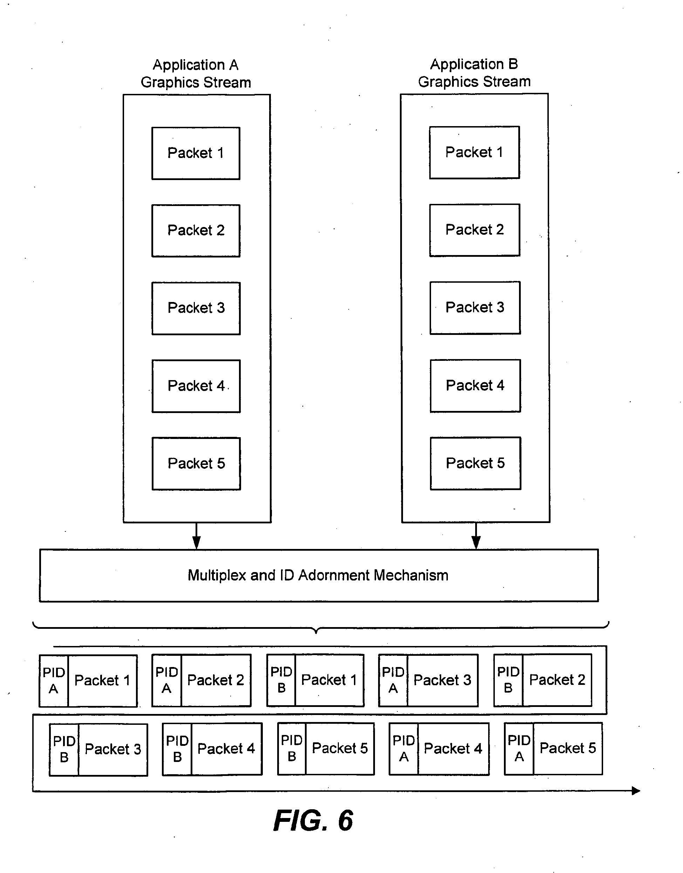

One example implementation described herein provides serialization that can be generalized for use in each of these cases. To this end, as represented in FIG. 6, each packet is tagged with one or more identifiers by a multiplexer / ID adornment mechanism 602. The example shows process identifiers (PIDs) comprising a series of unique identifiers that distinguishes the process of origin at each stage of consolidation of pipes. Other identifiers such as machine or session identifiers may be used to distinguish between devices and sessions of origin. Any other type of method that can uniquely identify the source of the stream before the merging is done may also be employed. Note that in FIG. 6, the packets are shown as having been put on the common transport in a hypothetical order.

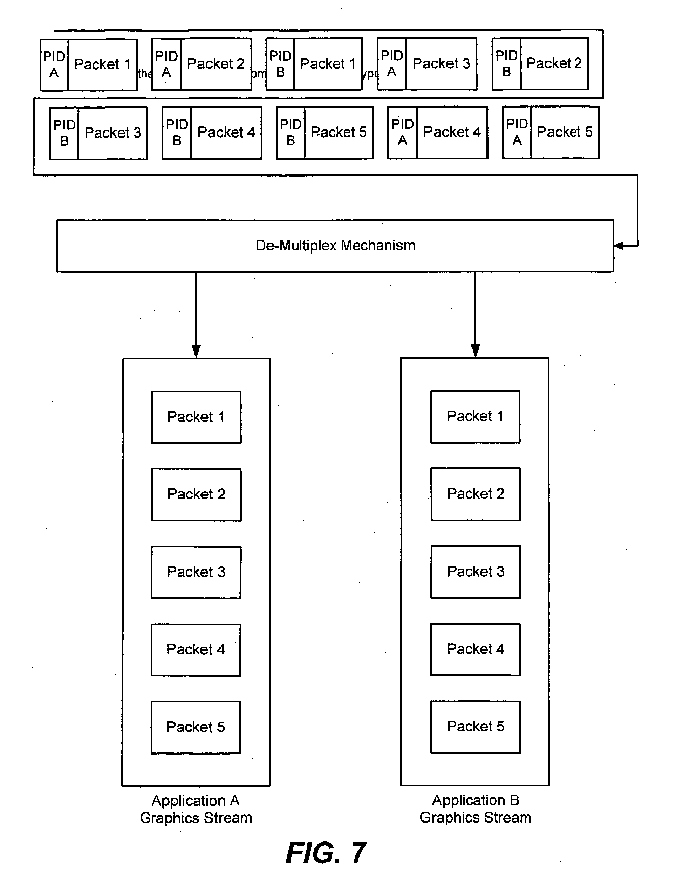

FIG. 7 shows the unpacking of information on the far side of the boundary, after which each bundle of information may be processed and rendered independently. This allows each process's content to be updated independently of the content of any other process. Independent processing allows granular updates to this content without clogging the transport pipe, including when transporting complex graphics.

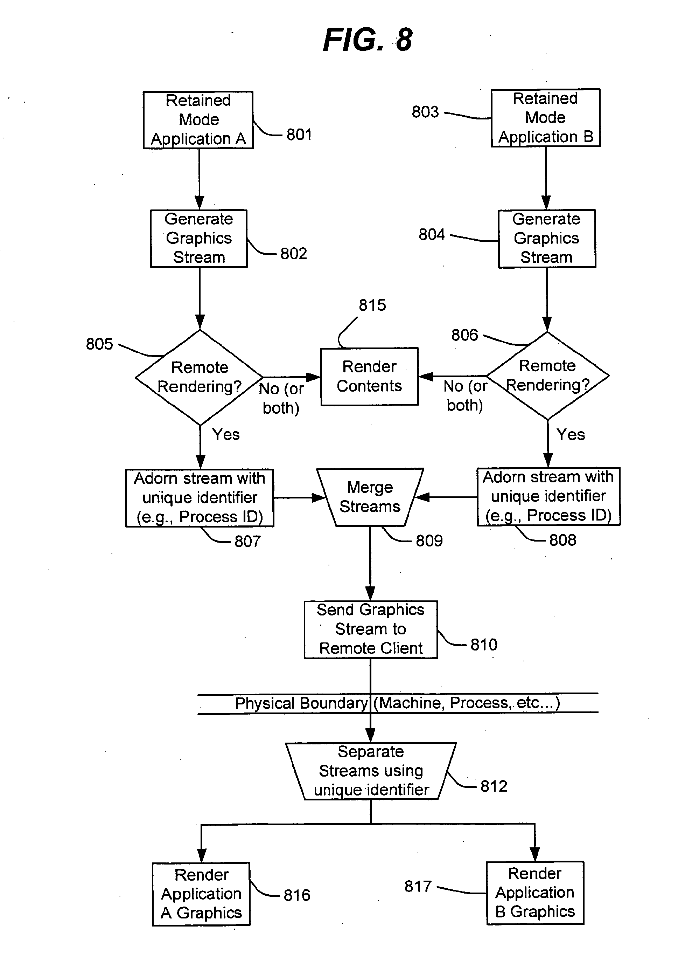

FIG. 8 describes the logic of various mechanisms and methods that enable the efficient rendering of graphics or other content, when that graphics or other content is defined on one side of a boundary but processed (e.g., rendered and displayed) on the far side of a boundary. For example, two applications may generate separate rendering trees (e.g., a user interface, or UI, tree with application-specific information), as generally represented in FIG. 8 via blocks 801-804. For remote rendering as determined via steps 805 and 806, the description of each tree may be combined with a unique ID (steps 807 and 808) for each application prior to submission for transport. The adornment within each packet may include destination, origin, process ID (to differentiate applications on the client side). The unique ID provides for the independent management of tree and transport of the information, the execution of parallel content on the client side and/or the creation of security boundaries between application. For example, the mechanism may only use packets that are validated, allowing increased security. Further, the mechanism makes terminal services resemble the TCP layer on top of the IP layer on top of the transport layer.

When the streams are merged for multiplexing, as represented by step 810, the transport thus contains the unique ID that identifies which application the tree will be used to update. Local rendering, which may be in addition to or instead of remote transporting, is represented by step 815.

Step 812 represents the de-multiplexing operation, in which the unique identifier is used to separate the merged streams of graphics instructions. Steps 816 and 817 represent the rendering of the independent streams.

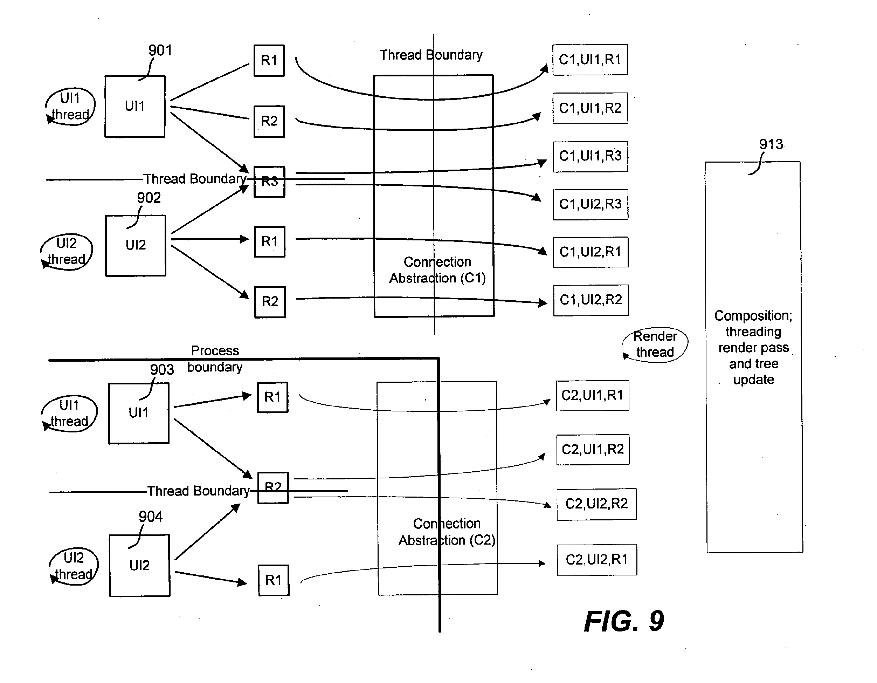

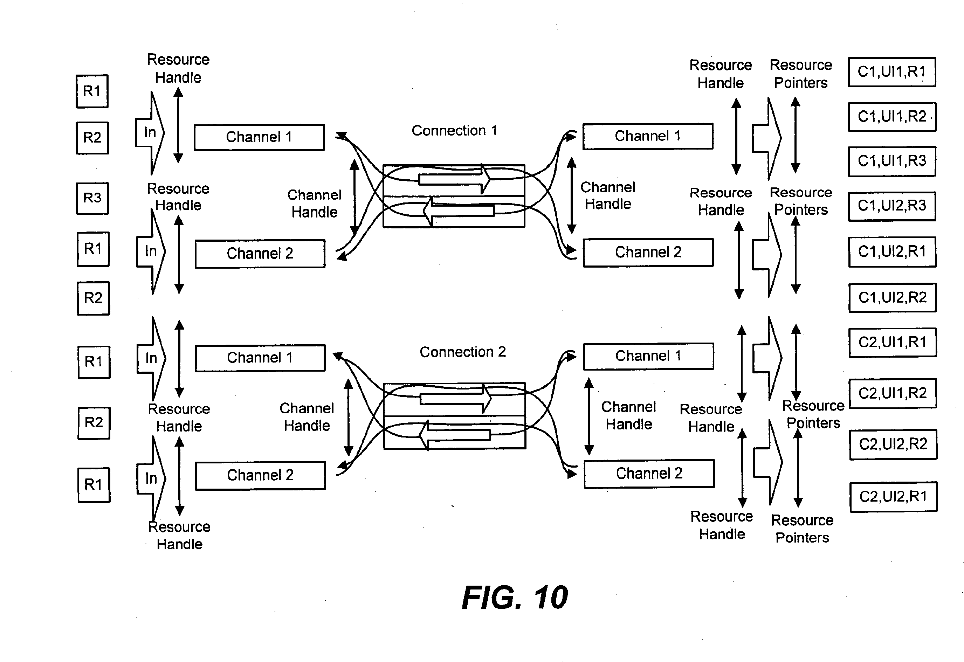

Turning to an explanation of example structure and functionality of the transport subsystem, one aspect of the transport subsystem is directed towards the decoupling of the composition thread from the threads used by applications to affect changes in the composition tree (that is, from the applications' UI threads). In general, FIGS. 9 and 10 provide an example of stream adornment and stream generation. To this end, a channel concept is introduced to address resources within parallel threads generating commands from within an application running on the server machine. The channels exist within a transport instance. The transport then maps connection context to the unique identifier used to adorn the graphics stream.

FIG. 9 shows a simplified diagram of objects that participate in such a composition process, and generally represents how data moves across boundaries in the system, along with the subsystems that participate in the data flow. The boundaries that the data cross may include thread, process and/or machine boundaries, as generally depicted in the transport usage diagram of FIG. 9.

Participants in the information exchange represented in FIG. 9 include UI contexts 901-904 that provide thread affinity, managed resources that are object model interfaces for the unmanaged resources that are used at composition time, and unmanaged resources comprising graphics objects used during a composition pass. Also represented is a composition infrastructure 913 that composes an unmanaged composition tree.

The implementation of FIG. 9 solves a number of data transfer problems, including updating the unmanaged resource in response to API calls made on the managed resources, having the unmanaged resource lifetime managed by the managed resources, and defining scopes within which commands need to be executed in the same order in which they are issued.

The solution takes as few locks as possible on the UI threads, and no locks on the composition thread. The need to lock the composition thread may be eliminated by translating API calls on the managed resources into commands, and then enqueuing the commands into a command change queue. The execution of this command queue results in unmanaged resource updates. A pipe for sending commands from the managed resource to the change queue may be used to facilitate avoiding the locking of the composition thread as well as the need to maintain the command sequence. However, some extra structure is required in this pipe, because a managed resource can be accessed from multiple threads and because of the need to minimize locking across UI thread boundaries.

In order to address command updates, lifetime management and command order preservation requirements, the concept of a channel is defined, and the channel associated with a UI context. The channel provides an order-preserving command pipe for managed unmanaged resource communication within the bounds of a UI context.

For both the client and server side of the data transfer, the channel provides an addressing scheme that allows managed resources to update unmanaged resources, and to control unmanaged resource lifetime. The addressing scheme associates handle values to managed unmanaged resource pairs, referred to as a resource handle. When a managed resource is used in a UI context, the managed resource uses the UI context's channel to create a corresponding unmanaged resource on the channel. A channel associated with a UI context is also identified by a handle (channel handle). For managed resources that can be used on multiple UI contexts, an unmanaged resource is created for each of the channels on which it is used. For each process / application domain from which the compositor is used, a connection that contains as many channels as there are UI contexts is defined. FIG. 9 shows the relationship between managed and unmanaged objects, while FIG. 10 represents logical channel use and resource addressing, showing how managed unmanaged pairs relate to their corresponding channels.

The mapping between managed resources and their corresponding unmanaged resources is thus qualified by connection ID, channel handle and resource handle.

Note that not only may data flow from managed resources to unmanaged resources, but may also flow from unmanaged resources to managed resources. Data originating in the unmanaged resources and consumed in the UI context may, for example, comprise notifications that are sent to indicate certain conditions occurring in the unmanaged resources.

While the invention is susceptible to various modifications and alternative constructions, certain illustrated embodiments thereof are shown in the drawings and have been described above in detail. It should be understood, however, that there is no intention to limit the invention to the specific forms disclosed, but on the contrary, the intention is to cover all modifications, alternative constructions, and equivalents falling within the spirit and scope of the invention.

## Claims

1. In a computing environment, a method comprising:
connecting to a client computer;
generating first higher-level graphics instructions from a first application program;
associating a first identifier representing the first application program with the first higher-level graphics instructions;
generating second higher-level graphics instructions from a second application program;
associating a second identifier representing the second application program with the second higher-level graphics instructions; and
sending the first higher-level graphics instructions and the second higher-level graphics instructions to the client computer.

2. The method of claim 1 further comprising, receiving the first higher-level graphics instructions and the second higher-level graphics instructions at the client computer, and separating the first higher-level generating graphics from the second higher-level graphics commands based on the first and second identifiers.

3. The method of claim 1 wherein generating the first higher-level graphics instructions from the first application program comprises using a dedicated thread.

4. The method of claim 1 wherein sending the first higher-level graphics instructions to the client computer comprises sending high-level update information used to modify an existing graphical representation of the first application program.

5. The method of claim 1 further comprising, updating the first application program with the first higher-level graphics commands and updating the second application program with the second higher-level graphics commands.

6. The method of claim 1 wherein the identifier associated with the first higher-level graphics instructions corresponds to at least one of a connection identifier, channel handle and resource handle.

7. A computer-readable medium having computer-executable instructions, which when executed perform steps, comprising:
receiving at a client computer a stream comprising first higher-level graphics instructions associated with a first application program, and second higher-level graphics instructions associated with a second application program, the first higher-level graphics instructions associated with an identifier corresponding to the first application program;
processing the first higher-level graphics commands to update a first user interface on the client computer corresponding to the first application program; and
processing the second higher-level graphics commands to update a second user interface on the client corresponding to the second application program.

8. The computer-readable medium of claim 6 wherein processing the first higher-level graphics commands comprises separating the first higher-level generating graphics from the second higher-level graphics commands based on the first identifier.

9. The computer-readable medium of claim 6 wherein the identifier associated with the first higher-level graphics instructions corresponds to at least one of a connection identifier, channel handle and resource handle.

10. The computer-readable medium of claim 6 wherein processing the first higher-level graphics commands to update the first user interface comprises using at least some of the commands to modify a retained mode rendering tree that corresponds to the first user interface.

11. The computer-readable medium of claim 6 wherein the second higher-level graphics instructions are associated with a second identifier corresponding to the second application program, and having further computer-executable comprising receiving at the client computer the stream comprising third higher-level graphics instructions associated with a third application program.

12. A server computer comprising:
one or more application programs accessed by a client computer;
a compositor that extracts higher-level graphics commands from one of the application programs; and
a remote display driver that packages the higher-level graphics commands for use by the client computer to generate graphics.

13. The server computer of claim 12 further comprising means for associating a per-application identifier with each set of higher-level graphics commands corresponding to one of the application programs.

14. The server computer of claim 12 wherein the remote display driver packages the higher-level graphics commands by tagging serialized packets for consolidation into at least one transport pipe.

15. The server computer of claim 12 wherein the remote display driver packages the higher-level graphics commands for transport across a physical boundary.

16. The server computer of claim 12 wherein the remote display driver packages the higher-level graphics commands for transport across a machine boundary.

17. The server computer of claim 12 wherein the remote display driver packages the higher-level graphics commands for transport across a process boundary.

18. The server computer of claim 12 further comprising means for rendering graphics locally at the server.
